# EUROPÄISCHE PATENTSCHRIFT

(11) **EP 1 075 598 B1**
(45) Veröffentlichungstag und Bekanntmachung des Hinweises auf die Patenterteilung: **01.10.2003**
(21) Anmeldenummer: 00903500.7
(22) Anmeldetag: 11.01.2000
(51) Int. Cl.: F03B 13/20

(54) **WELLENKRAFTWERK**
WAVE POWER PLANT
CENTRALE ELECTRIQUE UTILISANT LA FORCE DES VAGUES

(30) Priorität: 04.02.1999 DE 19904459
(43) Veröffentlichungstag der Anmeldung: 14.02.2001
(73) Patentinhaber: Ranz, Klaus-Günter, 89075 Ulm (DE)
(72) Erfinder: Ranz, Klaus-Günter, 89075 Ulm (DE)
(74) Vertreter: Frohwitter, Bernhard, Dipl.-Ing.
(86) Internationale Anmeldenummer: DE0000064
(87) Internationale Veröffentlichungsnummer: WO00046499

(56) Entgegenhaltungen:
- DE-A- 2 523 809
- FR-A- 2 541 730
- GB-A- 2 289 228
- US-A- 1 423 115
- US-A- 4 453 894
- MARTELLUCCI L: "EVALUATION OF A SEA WAVE ENERGY CONVERTER WITH VARIABLE TRIM" INTERSOCIETY ENERGY CONVERSION ENGINEERING CONFERENCE,US,NEW-YORK, NY: IEEE,1997, Seiten 1990-1995, XP000779072 ISBN: 0-7803-4515-0

## Beschreibung

Die Erfindung betrifft eine Vorrichtung zur Erzeugung von Energie aus der Bewegung von Wasser.

Derartige Vorrichtungen sind als sogenannte Wellenkraftwerke bekannt. So ist es bei einem derartigen Wellenkraftwerk möglich, daß mehrere Meter hohe Wellenkammern vorhanden sind, in denen die Wasseroberfläche zusammen mit den Wellen schwankt. Nach oben laufen diese Wellenkammern zu engen Röhren zusammen, durch die in Abhängigkeit von der Bewegung der Wasseroberfläche entweder Luft heraus gepreßt oder angesaugt wird. Die auf diese Weise entstehenden Luftströme treiben Luftturbinen an, aus deren Rotation elektrische Energie erzeugt wird. Ersichtlich sind Aufwand und die Kosten für derartige Wellenkraftwerke sehr groß.

Eine andere Ausführung von Wellenkraftwerke sind: SchwimmKörper die sich über oder unter Wasser befinden und deren Bewegungen, verursacht durch Wellenbewegungen und Strömungen, über mechanische Einheiten in eine nutzbare Energieform gebracht werden soll, z.B. bei dem Wellenkraftwerk US-A-1,423,115, DE 196 15 115 A1 und dem Wellenkraftwerk GB 226 126 2A.

Beim Wellenkraftwerk DE 196 15 115 A1, sind mehrere horizontale auf der Wasseroberfläche befindliche Schwimmkörper, die einseitig an einem zentral angeordneten, vertikalen Schwimmkörper mittels Scharniere befestigt sind. Die Bewegungen der Schwimmkörper werden direkt per Hub über Pleuelstangen auf die Luftdruck erzeugenden Vorrichtungen übertragen. Bei kurzen bis mittleren Wellenperioden entstehen gleichzeitige Bewegungen der horizontalen Schwimmkörper und des vertikalen Schwimmkörpers. Deren Folge ist ein verkürzter Ausschlag. Eine wenig vorteilhafte Ausführung ist die unmittelbare Übertragung der Schwimmkörper Ausschläge auf die Energie erzeugenden Vorrichtungen. Die Ausschlags Energie der Schwimmkörper ist abnehmend, gleichzeitig nimmt die Widerstandsenergie der Luftdruck erzeugenden Vorrichtungen zu.

Beim Wellenkraftwerk GB 226 126 2A, soll mittels eines den Wellenbewegungen folgenden horizontalen Schwimmkörpers, Energie erzeugt werden. Der Schwimmkörper ist mit einer zentral angeordneten dualen Drehkonstruktion, die vierseitig drehbar ist, axial verbunden. Dieses Bauteil ist mit weiteren Bauteilen die vertikal angeordnet sind und sich unterhalb der Wasseroberfläche befinden, fest verbunden. Die Bauteile münden in eine Röhre, die am Meeresboden fixiert und fest verankert ist. Nachteilig bei der Wellenabnahme durch den horizontalen Schwimmkörper, wirkt sich bei niedrigen bis mittleren Wellenbewegungen die duale-axiale Drehkonstruktion auf den Wirkungsgrad aus. Da die Wasserwellen bei niedrigen bis mittleren Wellenbewegungen einseitig, zweiseitig und allseitig auf den horizontalen Schwimmkörper treffen und dabei rotierende und konträre Kräfte auf den Schwimmkörper einwirken. Nachteilig wirkt sich auch auf den Wirkungsgrad aus, wenn beide Körper: der Energie erzeugende und der Energie wandelnde Körper, Schwimmkörper sind, oder der erste Körper ein Schwimmkörper und der zweite Körper kein Schwimmkörper ist.

Davon ausgehend ist es die Aufgabe der Erfindung, eine Vorrichtung zur Erzeugung von Energie aus der Bewegung von Wasser zu schaffen, die mit möglichst geringem Aufwand zur Erzeugung von möglichst viel Energie in der Lage ist. Wobei schon bei der Abnahme der Wellenenergie bei niedrigem Wellengang, ein höchstmöglicher Wirkungsgrad erzielt werden soll.

Diese Aufgabe wird durch die erfindungsgemäße Vorrichtung der Verdichterboje zur Erzeugung von Energie aus der Bewegung von Wasser, vorteilhafterweise dadurch gelöst, daß ein erster auf der Wasseroberfläche liegender, voll ausgestalteter Nichtschwimmer Körper und ein zweiter sich überwiegend unter der Wasseroberfläche befindlicher, hohler Schwimmkörper, der den ersten über der Wasserlinie hält und ein dritter sich teilweise über der Wasseroberfläche befindlicher, hohler Schwimmkörper der als Anker und Haltekörper vorgesehen und die zusammen allseitig schwenk und drehbar miteinander verbunden sind, und das Mittel vorgesehen sind zur Erzeugung von Energie aus den Schwenkbewegungen des ersten Körpers im Hinblick auf den zweiten Körper. Zur Erzeugung von Energie aus den Bewegungen des zweiten Körpers im Hinblick auf den ersten Körper, vorteilig unterstützt durch den dritten Körper.

Der erste horizontale Nichtschwimmer Körper der sich auf der Wasseroberfläche befindet, ist dazu geeignet, daß er auf die Bewegungen des Wassers, insbesondere auf die der Wellen, unmittelbar durch Verlagerung des Schwerpunktes reagiert.
Der zweite Schwimmkörper der sich weitgehend unterhalb der Wasseroberfläche befindet, verbleibt im Unterschied zum ersten Körper, eher stabil und hält den ersten Körper, verbunden durch ein Gelenk, über der Wasseroberfläche. Dadurch entsteht zwischen dem ersten und dem zweiten Körper eine Art von Schwenkbewegung, dem zweiten und dem ersten Körper eine Art von Schenkelbewegung, die in alle Richtungen gerichtet sein kann. Insbesondere entsteht zwischen dem zweiten und dem ersten Körper eine Art von Schenkelbewegung. Diese Schwenk und Schenkelbewegungen werden erfindungsgemäß dazu genutzt, um daraus Energie zu erzeugen. Dabei trägt der dritte Körper der sich teilweise über der Wasseroberfläche befindet und ebenfalls ein Schwimmkörper ist und als Anker und Haltekörper fungiert, vorteilig zur Verbesserung des Wirkungsgrads bei der Abnahme der Wellenbewegungen bei.

Ein wesentlicher Vorteil der Erfindung liegt darin, daß die Ausführung der Bauteile in ihrer Konstruktion einfach, stabil und ohne großen technischen Aufwand auszuführen sind, um die genannte Schwenk und Schenkelbewegung zwischen den beiden Körpern zu erzeugen. Damit werden insgesamt Aufwand und Kosten für die erfindungsgemäße Vorrichtung sehr gering.

Gleichzeitig ist es jedoch bei der Erfindung möglich, schon kleine Bewegungen des Wassers in Energie umzusetzen. Dies ergibt sich daraus, daß schon kleine Schwenk und Schenkelbewegungen der beiden Körper zueinander ohne weiteres in Energie umgesetzt werden können.

Ein weiterer Vorteil der Erfindung liegt in dem Wirkungsgrad bei der Energieerzeugung. Unter anderem aufgrund der schon bei kleinen Bewegungen des Wassers vorhandenen Möglichkeit der Energieerzeugung, besitzt die erfindungsgemäße Vorrichtung einen sehr hohen Wirkungsgrad. Auch damit wird das Kosten und Leistungsverhältnis der erfindungsgemäßen Vorrichtung weiter verbessert.

Wesentlich für die Erfindung ist die Erkenntnis, daß aus der Schwenkbewegung des ersten im Hinblick auf den zweiten Körper, und daß aus den Schenkelbewegungen des zweiten im Hinblick auf den ersten Körper, Energie erzeugt werden kann. Die Art und Weise der Erzeugung von Energie aus den Schwenk und Schenkelbewegungen und ihre Ausführungsform, wird nachfolgend erläutert.

Bei einer vorteilhaften Weiterbildung der Erfindung, werden die Schwenkbewegungen des ersten im Hinblick auf den zweiten Körper und die Schenkelbewegungen des zweiten im Hinblick auf den ersten Körper, vorzugsweise auf ein mittig angeordnetes mit beiden Körpern verbundenes Kugelgelenk übertragen. Das die allseitig schwenk und drehbar erfahrenen Bewegungen auf ein im Gelenk integriertes Hydraulik-Bauteil überträgt und so eine Energie übertragende Schubbewegung auslöst. Die Schubbewegung wird auf ein weiteres kleineres Hydraulik Bauteil übertragen, dessen Schubstangen Zylinderkolben bewegen, die einen Überdruck erzeugen. Der so erzeugte Überdruck wird in einem weiteren Bauteil gespeichert um ihn gleichmäßig an eine elektrischen Strom erzeugende Einheit abzugeben. Das kann durch eine Wasserturbine mit angeschlossenem Generator geschehen. Mit den Bauteilen der Erfindung wird somit eine einfache aber trotzdem effektive Möglichkeit geschaffen, wie durch die Schwenk und Schenkelbewegungen der beiden Körper zueinander, Energie erzeugt und in produzierende Energie umgesetzt werden kann.

Bei einer vorteilhaften Ausgestaltung der Erfindung, ist ein auf der Wasseroberfläche liegender, horizontaler erster Körper, ein vorzugsweise voll ausgestalteter Ring und ein zweiter vertikaler, sich weitgehend unter der Wasseroberfläche befindlicher hohler Schwimmkörper und ein dritter vertikaler hohler sich teilweise über der Wasseroberfläche befindlicher Schwimmkörper vorgesehen. Der zweite SchwimmKörper hält den ersten Körper über der Wasseroberfläche. Der dritte Schwimmkörper, der am Boden verankert und über eine gelenkige Rohrverbindung mit dem zweiten Schwimmkörper verbunden ist und somit für den zweiten Körper eine Halte und Ankerfunktion ausübt. Alle Körper sind miteinander durch mittig angeordnete Kugelgelenke verbunden. Dieses stellt eine besonders einfache und kostengünstig zu realisierende Möglichkeit dar, um alle drei Körper stabil nach allen Seiten schwenk und drehbar miteinander zu verbinden.

Besonders vorteilhaft ist, daß die Energie erzeugenden Schwenk und Schenkelbewegungen dadurch entstehen, daß der erste und zweite Körper durch gegensätzliche Kräfte, die in dem mittig angeordneten Kugelgelenk aufeinander treffen, ein labiles Gleichgewicht darstellen, und daß jede äußere einwirkende Kraft, auch unmittelbar eine Veränderung der bestehenden Lage verursacht. Besonders vorteilhaft, für den zweiten Schwimmkörper, wirkt sich die Verbindung zum dritten Schwimmkörper aus. Dadurch erfährt der zweite Schwimmkörper keine Behinderung durch das Gewicht der Ankertrosse.

Besonders vorteilhaft ist es, wenn das erste Kugelgelenk eine mit dem zweiten Körper verbundene Metallkugel aufweist, auf der ein erster Metallring gelagert und mit dem ersten Körper verbunden ist. Ebenfalls ist es besonders vorteilhaft, wenn ein zweiter Metallring auf der Metallkugel gelagert und mit dem ersten Metallring verbunden ist. Ein dritter Metallring als Halbkugel ausgebildet und fest mit dem ersten Metallring verbunden ist. Der erste und der zweite Metallring sind unmittelbar im Bereich des Äquators der Metallkugel angeordnet. Durch diese Maßnahme wird eine konstruktiv besonders stabile, aber trotzdem kostengünstig herzustellende Verbindung zwischen beiden Körpern geschaffen.

Besonders vorteilhaft ist es, wenn in der Metallkugel ein Hydraulik Bauteil integriert ist, das in Verbindung mit einem weiteren Hydraulik Bauteil steht und beide von unterschiedlichem Volumen sind, welches einer Übersetzung gleichkommt; und in deren Kammern, geteilt durch einen Kolben mit Schubstange, ein exakt gleich hoher Druck und ein gleiches Volumen an Flüssigkeit vorhanden ist. Die Schubstangen sind deshalb in der Lage den Bewegungsdruck den sie von außen durch die Schwenkbewegungen der beiden ersten und zweiten Körper, über die Halbkugel erfahren, unmittelbar auf ein Überdruck erzeugendes Bauteil zu übertragen. Dieses stellt unter anderem die Mittel dar, mit denen Energie aus den Schwenkbewegungen des ersten Körpers im Hinblick auf den zweiten Körper erzeugt wird.

Bei einer vorteilhaften Ausführungsform der Erfindung, ist der zweite Schwimmkörper an seinem unteren Ende mit einem Hohlkörper, in dem der erzeugte Überdruck gespeichert wird, fest verbunden. Zwischen beiden Körpern ist eine Metallkugel angebracht, die beide Körper fest miteinander verbindet. In der Mitte der Metallkugel sind zwei miteinander verbundene Metallringe an denen ein Metallrohr befestigt und mit einem Doppelgelenk verbunden, das unterhalb des dritten Schwimmkörpers angebracht ist. Somit wird eine stabile, allseitig schwenk und drehbare Verbindung zwischen dem zweiten und dritten Schwimmkörper geschaffen.

Besonders vorteilhaft wirkt sich diese Art von Verbindung für den zweiten Schwimmkörper aus, er wird in seinem Auftrieb von keinerlei Zerrungen der Verankerung, entstehend durch Strömungen, unterschiedlichen Wellenhöhen, behindert und erfährt deshalb auch keine Beeinträchtigung in seinem Wirkungsgrad.

Ein herausragender Vorteil der Erfindung ist, die Ausgestaltung des ersten Körpers als Nichtschwimmer Körper im Zusammenwirken mit dem zweiten Körper als Schwimmkörper. Durch den Schwimmkörper und dem zwischen beiden Körpern mittig angeordneten Kugelgelenk, ist der erste Körper in der Lage unmittelbar allseitig auf die ihn umgebenden Wellenbewegungen zu reagieren und seinen Schwerpunkt in jegliche Richtung zu verlagern. Ebenso ist es möglich und wirtschaftlich besonders vorteilhaft, wenn weitere Schwimmkörper Einheiten am dritten Schwimmkörper angeschlossen werden und somit zusätzliche Kosten für die Verankerung wegfallen.

Dies alles zusammen stellt eine besonders einfache Möglichkeit dar, wie der von der erfindungsgemäßen Vorrichtung erzeugte Überdruck in elektrische Energie umgewandelt werden kann. Durch die Verwendung der Speichervorrichtung kann der erfindungsgemäßen Vorrichtung zugeordnete Stromerzeuger, völlig unabhängig von dem ersten und dem zweiten Körper angeordnet werden. Diese Möglichkeit der Aufteilung in voneinander unabhängige Bestandteile, wie auch deren voneinander unabhängige Lokalisierung, stellen einen weiteren wesentlichen Vorteil der erfindungsgemäßen Vorrichtung dar, der insbesondere zu einer weiteren Kostenreduzierung beiträgt.

Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt eine schematische, teilweise geschnittene Seitenansicht eines Ausführungsbeispiels einer erfindungsgemäßen Vorrichtung zur Erzeugung von Energie,
- Figur 2: zeigt eine schematische, teilweise geschnittene Seitenansicht einer Ankervorrichtung in Verbindung mit der Figur 1.

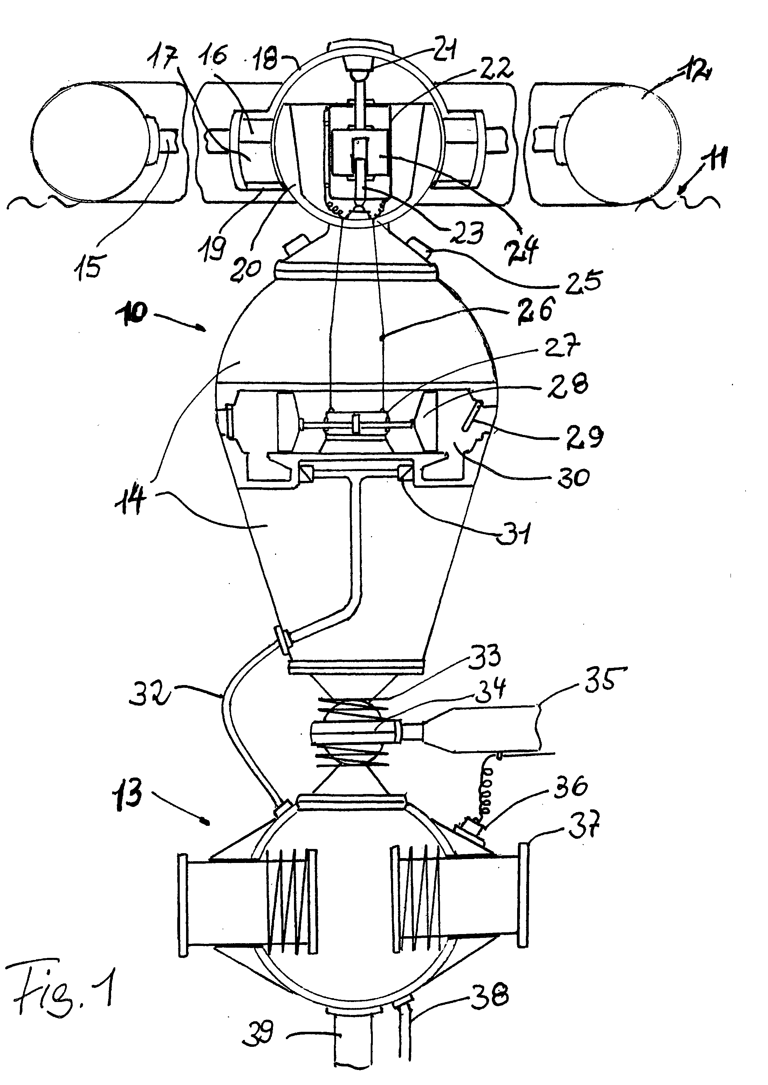

In der Figur 1, ist eine Vorrichtung (10) dargestellt, die zur Erzeugung von Energie aus der Bewegung von Wasser vorgesehen ist. Die Vorrichtung (10) schwimmt im Wasser insbesondere im Meer, wobei die horizontale Wasseroberfläche in der Figur 1 mit der Bezugsziffer (11) angedeutet ist. Die Vorrichtung (10) nutzt zur Energieerzeugung die Bewegung des Wassers, also insbesondere die der Wellen des Wassers aus.

Die Vorrichtung (10) weist eine bojenartige Form auf. Der obere Teil der Vorrichtung (10), der sich oberhalb der Wasseroberfläche befindet, wird von einem voll ausgestalteten Ringkörper (12) gebildet. Der untere Teil der Vorrichtung (10), der sich unterhalb der Wasseroberfläche befindet, wird von einem rotationssymmetrischen Hohlkörper (14) gebildet, der in vertikaler Richtung einen tropfenförmigen Querschnitt aufweist. Der voll ausgestaltete Ring (12) und der Hohlkörper (14) bilden eine gemeinsame, vertikale Achse und sind übereinander angeordnet und gelenkig miteinander verbunden. Der voll ausgestaltete Ringkörper (12) ist aus einem Metall hergestellt und mit Zement gefüllt, oder mit anderen Gewicht erzeugenden Materialien, und bildet somit einen nicht schwimmfähigen, instabilen Gewichtskörper. Der schnell und unmittelbar den Bewegungen (Schwerpunktverlagerung) des um ihn befindlichen Wassers folgt. Dabei kann es sich um eine horizontale Schubbewegung aufgrund von gegen den Ringkörper (12) auflaufenden Wellen, oder um eine Auf und Abbewegung handeln.

Der Hohlkörper (14) ist aus einem Metall hergestellt. An seinem oberen Ende ist der Hohlkörper (14) kugelförmig ausgebildet. Dabei ist ein äußerer erster Metallring (16) vorgesehen, der über eine Strebe (15) mit dem Ring (12) fest verbunden ist. Der erste Metallring (16) ist nicht mit dem Hohlkörper (14) verbunden. Der erste Metallring (16) ist mittels einer an seiner Oberseite befestigten äußeren Halbkugel (18) auf einer inneren, nach oben offenen Metallkugel (20) gelagert. Die Halbkugel (18) wird aus Metall erstellt. Der erste Metallring (16) ist unmittelbar oberhalb des Äquators der Metallkugel (20) angeordnet. Des weiteren ist ein äußerer zweiter Metallring (17) vorgesehen, der unmittelbar unterhalb des Äquators der Metallkugel (20) angeordnet ist und der fest mit dem ersten Metallring (16) verbunden ist. Von dem zweiten Metallring (17) erstreckt sich ebenfalls die Strebe (15) zu dem Ring (12). Damit sind der erste und der zweite Metallring (16,17) und damit auch der Ring (12) in jeder Richtung und damit um die innere MetallKugel (20) bzw. um deren Mittelpunkt schwenk und drehbar.

Wie erwähnt, ist der äußere erste Metallring (16) an seiner Oberseite mit der Halbkugel (18) versehen. Der äußere zweite Metallring (17) ist mit einem Dichtungsring (19) versehen Insgesamt entsteht damit eine dichte Ausbildung zwischen den drei Metallringen (16,17,19), der Halbkugel (18) und der Metallkugel (20).

Die Metallkugel (20) ist fest mit dem Hohlkörper (14) verbunden. In ihrem oberen Bereich, ist die Metallkugel (20) offen. Im Innenraum der Metallkugel (20) ist eine Antriebseinheit (22) untergebracht die zweiseitig gelenkig, oben mit der Halbkugel (18) und unten mit der Metallkugel (20) verbunden ist. Die Antriebseinheit (22) ist vertikal zum Ringkörper (12) angeordnet und ist durch einen Metallfederring gegen eine Drehung um die eigene Achse gesichert.

Die Antriebseinheit (22) ist ein geschlossener Druckzylinder, der an seiner Unterseite gelenkig mit der Metallkugel (20) verbunden ist an seiner Oberseite durch das Ende der Kolbenschubstange (24) gelenkig mit der Innenseite der Metallhalbkugel (18) verbunden ist und zwar an deren Schnittstelle. In den Kammern der Antriebseinheiten (22,27) die geteilt durch die Zylinderkolben (24) sind, besteht ein exakt gleich hoher Flüssigkeitsdruck. Die Hydraulik-Zylinder (22,27) sind miteinander durch die Druckleitungen (26) verbunden. Jede Bewegung die, die Metallhalbkugel (18) ausführt, wird als kurzer Schub auf die Antriebseinheit (22) übertragen und als langer Schub von der Antriebseinheit (27), auf den Überdruck erzeugenden Druckkolben (28) abgegeben. Die Kolben (28) erzeugen in den Wasserkammern (30), deren Wasserzufuhr durch Ventile (29) geregelt wird, einen Überdruck der über Rückschlag Ventile (31), einer Druckleitung (32), der Druckspeicher Vorrichtung (13) zugeführt wird. Zur Begrenzung der Schwenkbewegung des Ringkörpers (12) im Hinblick auf den Hohlkörper (14) sind Anschläge (25) vorgesehen, die an der Oberseite des Schwimmkörpers (14) angebracht sind. Gegen Rotationsbestrebungen des Hohlkörpers (14) ist eine Ringfeder (33) aus Metall vorgesehen. Zwischen dem Hohlkörper (14) und der Speichervorrichtung (13) ist ein Kugelgelenk (34) angebracht das mit beiden Körpern fest verbunden ist. Das Kugelgelenk (34) und das Verbindungsrohr (35) verbinden die Vorrichtung (10) und die Vorrichtung (40), allseitig beweglich und drehbar miteinander.

Die Speichervorrichtung (13) ist ein Wasser Druckspeicher der seinen Speicherdruck durch die Druck erzeugenden Einheiten (37) als Kolbendruck erfährt. Die Kolben (37) erfahren in doppelter Weise ihren Druck, einmal als Federdruck von innen und als Gewichtsdruck durch das Wasser von außen. Dadurch wird in der Speichervorrichtung (13) ein relativ gleichmäßiger Überdruck, zur Abgabe an eine weitere Energie erzeugende Einheit, erhalten. Die Lokal unabhängig z.B. eine Wasserturbine sein kann. Die Überdruck Zufuhr erfolgt über eine Druckleitung (38) an deren Ende sich ein Ventil-Regler befindet der die Wasser Mengenzufuhr zur Turbine regelt. Die Steuerung des Ventilreglers geschieht durch ein Steuergerät (36) mit integriertem Fühler. Das an der Unterseite der Speichervorrichtung (13) angebrachte Rohr (39) aus Metall, endet in einen Gewichtskörper der zur Stabilisierung des Hohlkörpers (14) beiträgt und dafür sorgt, das sich der Schwimmkörper (14) sich immer wieder relativ schnell in die vertikale Lage begibt.

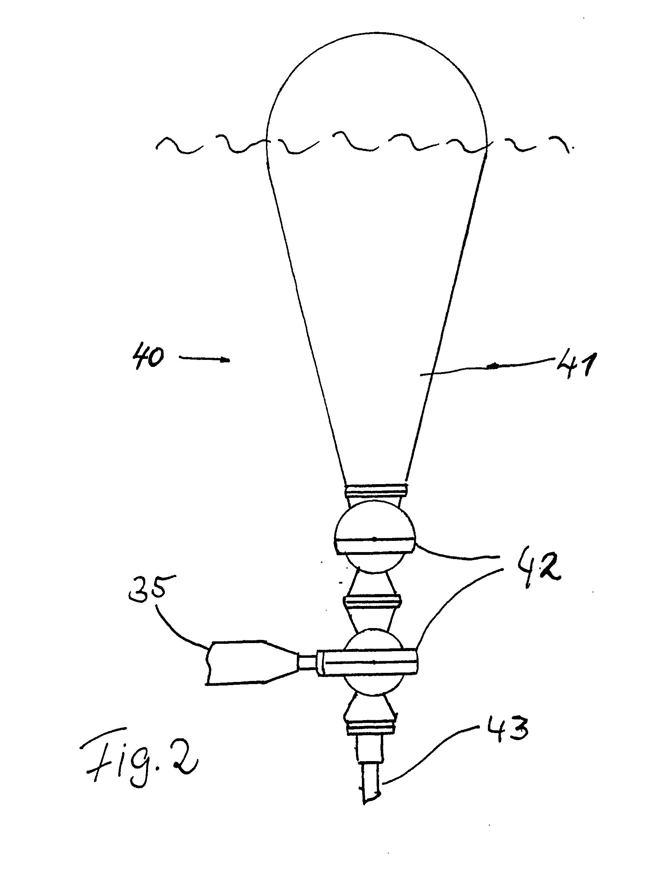

In der Figur 2, ist eine Ankervorrichtung (40) dargestellt deren Schwimmkörper (41) sich teilweise über der Wasseroberfläche befindet. Am unteren Ende des tropfenförmigen Schwimmkörpers (41) ist ein doppeltes, untereinander angeordnetes Kugelgelenk (42) angebracht und dessen unteres Gelenk durch ein Verbindungsrohr (35) mit dem Gelenk (34) der Vorrichtung (10) allseitig beweglich verbunden ist. Das obere Gelenk ist mit dem Schwimmkörper (41) allseitig beweglich und drehbar verbunden. An der unteren Gelenkkugel des Gelenkes (42) ist eine Ankertrosse (43) angeschlossen. Die Vorrichtung (10) ist um die Äquatorial Achse des Schwimmkörpers (41) drehbar.

### Bezugszeichen

- 10: Vorrichtung
- 11: Wasseroberfläche
- 12: Ringkörper
- 13: Speichervorrichtung
- 14: Hohlkörper (vertikal)
- 15: Strebe
- 16: Erster Metallring
- 17: Zweiter Metallring
- 18: Metallhalbkugel
- 19: Metalldichtungsring
- 20: Metallkugel (hohl)
- 21: Kugelgelenk
- 22: Hydraulik Zylinder (groß)
- 23: Führungsrohr
- 24: Zylinderkolben
- 25: Anschlag
- 26: Öldruck Leitung
- 27: Hydraulik Zylinder (klein)
- 28: Druckkolben
- 29: Magnet Schließventil
- 30: Wasserkammer
- 31: Druckventil
- 32: Überdruckleitung (Zufuhr)
- 33: Metall Federring
- 34: Kugelgelenk
- 35: Verbindungsrohr
- 36: Steuergerät mit Fühler
- 37: Druckkolben
- 38: Überdruckleitung zur Turbine
- 39: Metallrohr mit Gewicht
- 40: Vorrichtung
- 41: Schwimmkörper
- 42: Doppel Kugelgelenk
- 43: Ankertrosse

## Patentansprüche

1. Vorrichtung (10, 40) zur Erzeugung von Energie aus der Bewegung ' von Wasser, **dadurch gekennzeichnet, dass** ein erster, auf einer Wasseroberfläche (11) liegender Nichtschwimmer-Körper (12), ein zweiter, weitgehend unter der Wasseroberfläche befindlicher Schwimmkörper (14) und ein dritter, teilweise sich über der Wasseroberfläche befindlicher Schwimmkörper (41), die allseitig schwenk- und drehbar miteinander verbunden (34, 35, 42) sind, sowie Mittel (22, 24; 27, 28) vorgesehen sind zur Erzeugung von Energie aus der Schwenkbewegung des ersten Körpers (12) im Hinblick auf den zweiten Körper (14) sowie den Schenkelbewegungen des zweiten Körpers (14) im Hinblick auf den ersten Körper (12) unter Einbindung (35) des dritten Körpers (41).

2. Vorrichtung (10, 40) nach Anspruch 1, **dadurch gekennzeichnet, dass** die Schwenk- und Schenkelbewegungen in eine energieerzeugende Bewegung eines weiteren Bauteils (24) umgesetzt werden.

3. Vorrichtung (10, 40) nach einem der vorstehenden Ansprüche, **dadurch gekennzeichnet**, das als erster Körper ein nicht schwimmfähiger Ring (12) und als zweiter Körper ein Hohlkörper (14) vorgesehen sind.

4. Vorrichtung (10, 40) nach einem der vorstehenden Ansprüche, **dadurch gekennzeichnet, dass** zur schwenkbaren Verbindung des ersten (12), des zweiten (14) und des dritten Körpers (41) in alle Richtungen schwenk- und drehbare Kugelgelenke (16-20, 34, 42) vorgesehen ist.

5. Vorrichtung (10, 40) nach Anspruch 4, **dadurch gekennzeichnet, dass** ein Kugelgelenk (16-20) eine mit dem zweiten Körper (14) verbundene Metallkugel (20) aufweist, auf der ein erster Metallring (16) gelagert ist, der mit dem ersten Körper (12) verbunden ist, auf der ein zweiter Metallring (17), der mit dem ersten Körper (12) und dem zweiten Metallring (17) verbunden ist und auf der eine dritte Metallhalbkuge (18) angeordnet und mit dem ersten Metallring (16) verbunden ist, wobei beide Metallringe (16, 17) unmittelbar im Bereich des Äquators der Metallkugel (20) angeordnet sind.

6. Vorrichtung (10, 40) nach Anspruch 5, **dadurch gekennzeichnet, dass** ein Hydraulikantrieb (22) mit der Metallhalbkugel (18) gekoppelt ist.

7. Vorrichtung (10, 40) nach Anspruch 6, **dadurch gekennzeichnet, dass** der Hydraulikantrieb (22) seine Schubbewegung an einen weiteren, an Volumen kleineren Hydraulikantrieb (27) weitergibt, um mit seinem äußeren Druckkolben (28) einen Überdruck zu erzielen.

8. Vorrichtung (10, 40) nach Anspruch 7, **dadurch gekennzeichnet, dass** der Überdruck einer Speichervorrichtung (13) zugeführt wird, um ihn an eine lokal unabhängige, der Vorrichtung (13) zugeordnete Wasserturbine mit angeschlossenem Generator zuzuführen.

## Claims

1. Device (10, 40) for the generation of energy from the movement of water, **characterized in that** a first non-float body (12) lying on a water surface (11), a second floating body (14) located largely below the water surface and a third floating body (41) located partially above the water surface, which are connected (34, 35, 42) to one another pivotably and rotatably on all sides, are provided, and means (22, 24; 27, 28) are provided for the generation of energy from the pivoting movement of the first body (12) with respect to the second body (14) and from the limb movements of the second body (14) with respect to the first body (12), with the inclusion (35) of the third body (41).

2. Device (10, 40) according to Claim 1, **characterized in that** the pivoting and limb movements are converted into an energy-generating movement of a further component (24).

3. Device (10, 40) according to one of the preceding. claims, **characterized in that** a non-floating ring (12) is provided as the first body and a hollow body (14) is provided as the second body.

4. Device (10, 40) according to one of the preceding claims, **characterized in that** spherical joints (16-20, 34, 42) pivotable and rotatable in all directions are provided for the pivotable connection of the first (12), of the second (14) and of the third (41) body.

5. Device (10, 40) according to Claim 4, **characterized in that** a spherical joint (16-20) has a metal sphere (20) which is connected to a second body (14) and on which is mounted a first metal ring (16) connected to the first body (12), on which the second metal ring (17) connected to the first body (12) and to the second metal ring (17) is arranged, and on which a third metal hemisphere (18) is arranged and connected to the first metal ring (16), the two metal rings (16, 17) being arranged directly in the region of the equator of the metal sphere (20).

6. Device (10, 40) according to Claim 5, **characterized in that** a hydraulic drive (22) is coupled to the metal hemisphere (18).

7. Device (10, 40) according to Claim 6, **characterized in that** they hydraulic drive (22) transmits its thrusting movement to a further hydraulic drive (27) of smaller volume, in order to achieve an overpressure by means of the outer pressure piston (28) of the latter.

8. Device (10, 40) according to Claim 7, **characterized in that** the overpressure is supplied to a storage device (13), in order to supply it to a locally independent water turbine assigned to the device (13) and having a connected generator.

## Revendications

1. Dispositif (10, 40) pour produire de l'énergie à partir du mouvement de l'eau, **caractérisé en ce que** sont prévus un premier corps non flottant (12) se trouvant sur une surface d'eau (11), un deuxième corps flottant (14) se trouvant largement en dessous de la surface de l'eau et un troisième corps flottant (41) se trouvant partiellement au-dessus de la surface de l'eau, ces corps étant reliés entre eux (34, 35, 42) de manière à pouvoir pivoter et tourner dans tous les sens, ainsi que des moyens (22, 24; 27, 28) servant à produire de l'énergie à partir du mouvement de pivotement du premier corps (12) par rapport au deuxième corps (14) ainsi qu'à partir des oscillations du deuxième corps (14) par rapport au premier corps (12) en incluant (35) le troisième corps (41).

2. Dispositif (10, 40) selon la revendication 1, **caractérisé en ce que** les mouvements de pivotement et les oscillations sont convertis en un mouvement d'un autre composant (24) produisant de l'énergie.

3. Dispositif (10, 40) selon l'une quelconque des revendications précédentes, **caractérisé en ce qu'**une bague non flottante (12) est prévue comme premier corps et un corps creux (14) comme deuxième corps.

4. Dispositif (10, 40) selon l'une quelconque des revendications précédentes, **caractérisé en ce que** des articulations à rotules (16-20, 34, 42) pouvant pivoter et tourner dans tous les sens sont prévues pour la liaison pivotante du premier corps (12), du deuxième corps (14) et du troisième corps (41).

5. Dispositif (10, 40) selon la revendication 4, **caractérisé en ce qu'**une articulation à rotule (16-20) comprend une boule métallique (20) reliée avec le deuxième corps (14), sur laquelle est logée une première bague métallique (16) reliée avec le premier corps (12), sur laquelle est logée une deuxième bague métallique (17) reliée avec le premier corps (12) et avec la deuxième bague métallique (17) et sur laquelle une troisième demi-boule métallique (18) est logée et est reliée avec la première bague métallique (16), les deux bagues métalliques (16, 17) étant disposées directement dans la zone de l'équateur de la boule métallique (20).

6. Dispositif (10, 40) selon la revendication 5, **caractérisé en ce qu'**un entraînement hydraulique (22) est couplé avec la demi-boule métallique (18).

7. Dispositif (10, 40) selon la revendication 6, **caractérisé en ce que** l'entraînement hydraulique (22) transmet son mouvement de poussée à un autre entraînement hydraulique ayant un volume inférieur (27) pour obtenir une surpression avec son piston extérieur de poussée (28).

8. Dispositif (10, 40) selon la revendication 7, **caractérisé en ce que** la surpression est amenée dans un dispositif de stockage (13) pour la transférer vers une turbine à eau localement indépendante, associée au dispositif (13) et à laquelle est raccordé un générateur.
